# EUROPÄISCHE PATENTSCHRIFT

(11) **EP 0 563 867 B1**
(45) Veröffentlichungstag und Bekanntmachung des Hinweises auf die Patenterteilung: **21.01.1998**
(21) Anmeldenummer: 93105201.3
(22) Anmeldetag: 30.03.1993
(51) Int. Cl.: G09F 7/18, G09F 3/20, G09F 23/00, G09F 21/04

(54) **Werbeträger für Innenräume von Fahrzeugen**
Advertising support for the inside of vehicles
Support de publicité pour l'intérieur de véhicules

(30) Priorität: 31.03.1992 DE 9204359 U
(43) Veröffentlichungstag der Anmeldung: 06.10.1993
(73) Patentinhaber: Jünemann, Bernward, D-40476 Düsseldorf (DE)
(72) Erfinder: Jünemann, Bernward, D-40476 Düsseldorf (DE)
(74) Vertreter: Türk, Gille, Hrabal, Leifert

(56) Entgegenhaltungen:
- DE-U- 8 915 241
- DE-U- 9 017 186
- DE-U- 9 204 359
- US-A- 4 176 483
- US-A- 4 440 443
- US-A- 4 584 603

## Beschreibung

Die Erfindung betrifft einen Werbeträger für Innenräume von Fahrzeugen, mit einer kastenförmigen Halterung zum auswechselbaren Halten von Werbemitteln, beispielsweise an der Kopfstütze eines Fahrzeugsitzes, die wenigstens eine durchsichtige Aufnahme zum Einstecken oder Einlegen von blatt-, bogen- oder plattenförmigen Werbemitteln aufweist.

Im allgemeinen wird Werbung mittels Plakaten und dergleichen bisher an Großplakatwänden, an Plakatwänden an Haltestellen öffentlicher Verkehrsmittel, auf den Außenflächen von Bussen, Bahnen, Taxis und dergleichen vorgenommen. Auch ist es bekannt, Werbeflächen für Plakatwerbung im Innenraum von öffentlichen Verkehrsmitteln wie Omnibussen und Bahnen vorzusehen.

Im Stand der Technik, von dem die Erfindung ausgeht (DE-U-90 17 186.1), ist ein Werbeträger für Innenräume von Fahrzeugen bekannt, der an einer Kopfstütze angeordnet werden kann und eine kastenförmige Halterung mit einer durchsichtigen Aufnahme zum Einstecken eines Werbemittels aufweist.

Weiterhin sind im Stand der Technik auf anderen Gebieten Display-Vorrichtungen bekannt, die jedoch nicht als Werbeträger bestimmt sind. Einerseits ist beispielsweise eine Display-Vorrichtung bekannt (US-A 4,176,483), die kurz hinter dem Rückfenster im Innenraum eines Kraftfahrzeuges angeordnet ist und sich dazu eignet, den Betrachtern in dem jeweiligen Bereich bevorzugte Radiofrequenzen anzuzeigen. Andererseits ist auch eine Display-Vorrichtung bekannt (US-A 4,176,483), die insbesondere an den Rücksitzlehnen in Fluzeugsitzen angeordnet werden kann und den Betrachtern zum Zeitvertreib die Möglichkeit gibt, Videofilme anzusehen, Videospiele durchzuführen oder spezielle Fluginformationen zu erhalten.

Im Stand der Technik, von dem die Erfindung ausgeht, ist nachteilig, daß die durch den Werbeträger realisierte Wirksamkeit der Werbebotschaft nicht optimal ist. Da der Werbeträger vorzugsweise an den Rückseiten von Kopfstützen angeordnet ist und nicht jeder Sitz direkt an einem Fenster des Fahrzeuges gelegen ist, ist das entsprechende Werbemittel aufgrund ungünstiger Lichtverhältnisse nicht immer gut zu erkennen, insbesondere dann nicht, wenn das Fahrzeug während der Nacht unterwegs ist. Weiterhin kann der Betrachter mit der Zeit das Interesse an dem sich in Sichtweite befindenden Werbemittel verlieren, da er dies mit der Zeit ja während der Fahrt zur Genüge kennengelernt hat und sich anderen Dingen, wie beispielsweise der Umgebung zuwendet.

Der Erfindung liegt daher die Aufgabe zugrunde, den bekannten Werbeträger, von dem die Erfindung ausgeht, derart auszugestalten und weiterzubilden, daß die Werbebotschaft für den Betrachter, insbesondere bei ungünstigen Lichtverhältnissen, gut zu erkennen ist und die Aufmerksamkeit des Betrachters wesentlich erhöht ist.

Diese Aufgabe wird erfindungsgemäß mit einem Werbeträger der eingangs genannten Gattung gelöst, der die Merkmale des kennzeichnenden Teiles des Patentanspruches 1 aufweist. Vorteilhafte Ausgestaltungen und Weiterbildungen dieser Erfindung sind Gegenstand der Unteransprüche.

Dadurch, daß die Halterung als Kasten für bewegbare bzw. wechselnde Werbemittel, der an der Rückseite der Kopfstütze angeordnet ist, ausgebildet ist, der mit einer Lichtquelle versehen ist, ist eine optimalere Wirksamkeit der Werbebotschaft erreicht. Einerseits ist nun auch bei ungenügenden Lichtverhältnissen oder bei Nachtfahrten aufgrund der separaten Lichtquelle das entsprechende Werbemittel für den Betrachter gut zu erkennen. Andererseits ist die Aufmerksamkeit des Betrachters aufgrund der durch die Lichtquelle hervorgerufenen besseren Lichtverhältnisse erhöht. Insbesondere dann, wenn die Werbemittel bewegbar sind können dem Betrachter unterschiedliche und damit unterschiedlich interessante Werbemotive zur Betrachtung angeboten werden. Im Ergebnis ist die Werbebotschaft für den Betrachter optimal erkennbar und seine Aufmerksamkeit erhöht.

Insbesondere trägt hierzu folgendes bei:

Durch die Nutzung der Kopfstützen von Sitzen in öffentlichen Verkehrsmitteln kann die Ablenkung des Betrachters sehr gering gehalten werden, weil der Betrachter unmittelbar vor der Werbefläche sitzt und diese überduchschnittlich lang betrachten kann. So wurde für Omnibusse des öffentlichen Nahverkehrs ermittelt, daß die Durchschnittsfahrdauer jedes Fahrgastes etwa fünfzehn Minuten beträgt. Für diese Zeitdauer wirkt auf den Betrachter das vor ihm befindliche Werbebild bzw. die dort ablaufende Werbung ein. Daher kann man sowohl mehr Textinhalte und Bilder übermitteln als auch ungezählte Blickkontakte herbeiführen. Ferner läßt sich der Kreis der Betrachter, auf welche die Werbung einwirkt, klar definieren, beispielsweise in Schulbussen oder in Verkehrsmitteln, die bevorzugt von Studenten benutzt werden. Ferner läßt sich bei Häufigfahrern der Kreis derselben nach Einkommensverhältnissen sowie sozialem Status gliedern, da beispielsweise Taxis bevorzugt von Geschäftsleuten und Personen besserer Einkommensverhältnisse benutzt werden, so daß mit dem erfindungsgemäßen Werbeträger die Werbung gezielt auf die zu erwartenden Benutzer des entsprechenden Verkehrsmittels abgestellt werden kann.

Die Nutzung der Kopfstützen der Sitze öffentlicher Verkehrsmittel wie Taxis, Busse, Bahnen, Flugzeuge usw. stellt für Werbetreibende einen wichtigen Fortschritt dar, da das Werbemedium sowohl nach den vorgenannten Kriterien als auch bzgl. Wirkunsdauer und Zielgruppenspezifikation gewählt werden kann. Dies ist sehr positiv zu bewerten. Auch ergibt sich die Möglichkeit, eine spezifische, beispielsweise auf die speziellen kommunalen Verhältnisse abgestellte, Werbung zu treiben.

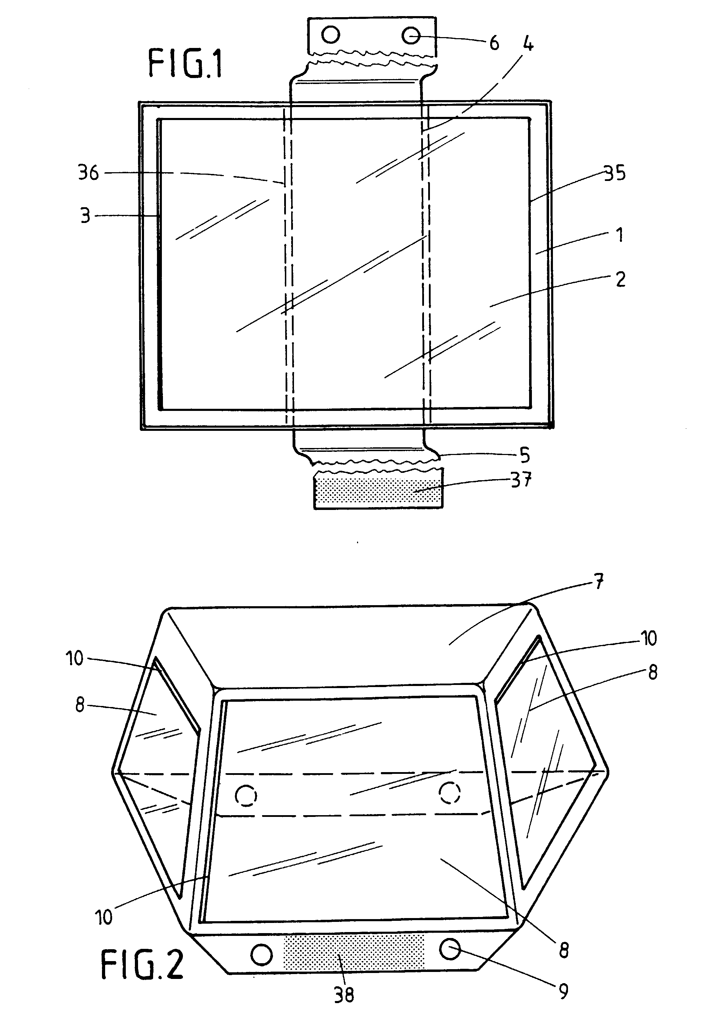

In der Zeichnung sind in den Figuren 1 bis 6 sechs Ausführungsbeispiele von Werbeträgen für Innenräume von Fahrzeugen in schaubildlicher Ansicht schematisch dargestellt.

Der Werbeträger gemäß Fig. 1 hat eine auf die nicht dargestellte Kopfstütze eines Fahrzeugsitzes aufspannbare Grundplatte 1, auf die eine Klarsichttasche 2 aufgeschweißt ist, welche zum Einschieben von Werbeplakaten oder sonstigen blattförmigen, bogenförmigen oder plattenförmigen Trägermaterialien für Werbung und sonstige Zwecke aufgeschweißt ist. Die stabile bzw. steife Grundplatte 1 bietet der aufgeschweißten Klarsichttasche 2 und dem in diese eingeschobenen Plakaten und dergleichen einen stabilen Halt und Sitz.

Die entlang einer umlaufenden Schweißnaht (34) an der Grundplatte (1) angebrachte Klarsichttasche 2 weist an einer Seite eine vertikale schlitzartige Öffnung 3 auf, welche das Einschieben und auch das Herausnehmen von Werbeplakaten und dergleichen gestattet.

Während auf der einen Seite der Grundplatte 1 die Klarsichttasche 2 angebracht ist, ist auf die gegenüberliegende Seite oder Rückseite der Grundplatte 1 ein Streifen 4 aus Kunststoff entlang vertikaler paralleler Schweißnähte 36 aufgeschweißt, der einen Tunnel zum Durchziehen eines dehnbaren oder streckbaren Bandes 5 bietet, das aus Gummi oder sonstigem Stretchmaterial besteht. Obwohl in Figur 1 nur ein Band 5 dargestellt ist, können auf der Rückseite der Grundplatte 1 parallel zueinander auch zwei oder mehr Streifen 4 vorgesehen sein, um mehrere Bänder 5 einziehen zu können.

An jedem Ende jedes Bandes 5 sind Befestigungselemente wie Druckknöpfe 6 oder Klettbandstreifen 37 vorgesehen, die einen stabilen und festen Sitz des Werbeträgers an einer Kopfstütze gewährleisten und andererseits die Möglichkeit schaffen, den Werbeträger bei Bedarf auszuwechseln oder auch noch nachträglich an einer Kopfstütze anbringen zu können.

Die Grundplatte 1 kann aus PVC, Karton, Gummi, Leder oder Aluminium bestehen, während die Klarsichttasche 2 vorzugsweise aus Kunststoff-Glasfolie oder einer PVC-Klarsichtfolie hergestellt wird.

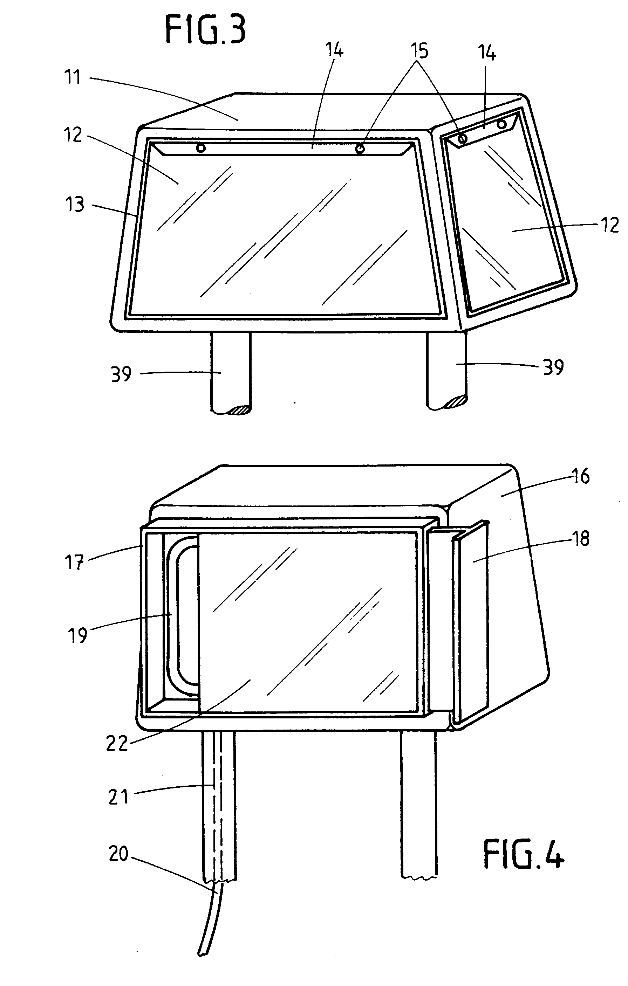

In Figur 2 hat der geseigte Werbeträger einen auf eine Kopfstütze eines Fahrzeugsitzes passenden Überzug 7, der mit drei aufgeschweißten Klarsichttaschen 8 zur Aufnahme unterschiedlicher Werbeplakate oder sonstiger Werbemittel versehen ist. Die Klarsichttaschen 8 sind dabei an unterschiedlichen Seiten des Überzuges 7 angeordnet, so daß sie sich dem Betrachter in unterschiedlichen Winkeln darbieten.

Bei dem Werbeträger gemäß Figur 2 sind die verschiedenen Klarsichttaschen 8 unterschiedlich groß und auch unterschiedlich hoch ausgebildet, jedoch können sie auch gleiche Höhe aufweisen, um aneinander anschließende Werbeplakate oder sonstige Werbemittel aufzunehmen.

Der Überzug 7 kann an die unterchiedlichen Kopfstützen verschiedener Fahrzeugtypen angepaßt ausgelegt sein. Am unteren Ende zumindest einer Wand desselben sind Befestigungsmittel wie Druckknöpfe 9 oder Klettbandstreifen 38 vorgesehen, die einen festen Sitz des Überzuges und auch die Möglichkeit zum Auswechseln des betreffenden Werbeträgers bieten. Die hier nicht dargestellte Kopfstütze wird beim Auswechseln des Überzuges 7 nicht beschädigt.

Jede der einzelnen Klarsichttaschen 8 ist mit einer schlitzartigen Öffnung 10 zum Einschieben oder Herausnehmen blattförmiger Werbemittel versehen, die sich entweder an der oberen Kante oder an einer der Seitenkanten befindet. Flache Werbemittel können Plakate sein, jedoch können auch Postantwortkarten, Visitenkarten und dergleichen eingeschoben und wieder herausgezogen werden.

Der Überzug 7 kann aus PVC, aus textilem Material wie Gewebe, aus Leder oder aus Weichgummi bestehen, während die Klarsichttaschen 8 aus den in Verbindung mit Figur 1 genannten Materialien hergestellt werden können.

Bei dem Werbeträger gemäß Figur 3 ist eine Kopfstütze 11 eines Fahrzeugsitzes direkt mit Klarsichttaschen 12 zum Einstecken von Werbemitteln und dergleichen versehen. Die Einstecktaschen 12 sind dementsprechend unmittelbar auf den Seiten oder Seitenflächen der Kopfstütze 11 angebracht und befestigt. Diese Kopfstütze 11 ist mittels Stempeln 39 auswechselbar auf der Rückenlehne eines Fahrzeugsitzes anzubringen, die selbst nicht dargestellt ist.

Hier sind die zum Einstecken von Werbemitteln dienenden Klarsichttaschen 12 in das die Oberfläche der Kopfstütze 11 bildende Material 13 eingearbeitet und somit von diesem Material rahmenartig umsäumt.

Die einzelnen Klarsichttaschen 12 weisen am oberen Rand angebrachte Öffnungen 14 zum Einstecken von Werbemitteln auf, die mittels Druckknöpfen 15 oder einem Klettbandverschluß zu öffen und zu schließen sind. Diese Öffnungen können sich auch an jeweils einer Seite einer der Klarsichttaschen 12 befinden.

Die Kopfstütze 11 kann aus textilem Material wie Gewebe, aus Leder, aus Kunststoff wie PVC, aus Weichgummi, aus Edelstahl, aus Zellstofffüllmaterial und aus Schaumstoff bestehen, wobei diese Materialien auch in einer dem Zweck einer Kopfstütze entsprechenden Weise miteinander kombiniert werden können.

Die Klarsichttaschen 12 können aus den in Verbindung mit Figur 1 beschriebenen Materialien bestehen.

Bei der erfindungsgemäßen Ausführungsform gemäß Figur 4 ist an der Rückseite einer Kopfstütze 16 eines Fahrzeugsitzes ein Leuchtkasten 17 angebracht, der in die Kopfstütze 16 fest integriert ist. Dieser Leuchtkasten 17 ist mit einem horizontal einschiebbaren Schlitten 18 versehen, der die Aufnahme von Plakaten und dergleichen oder Diapositiven ermöglicht. Dieser Schlitten 18 kann auch vertikal einschiebbar gelagert sein.

Im Leuchtkasten 17 befinden sich Leuchtkörper 19, beispielsweise Niedervolt-Neonröhren oder Glasfaserleiter, die eine Ausleuchtung der am Schlitten 18 angebrachten Plakate oder Diapositive gewährleisten.

Den Abschluß des Leuchtkastens 17 zum Betrachter bildet eine Scheibe 22, die aus Glas oder, was zweckmäßiger ist, aus durchsichtigem Kunststoff besteht. Diese Scheibe dient zum Schutz der in den Schlitten 18 eingelegten Plakate oder Diapositive.

Die Kopfstütze 16 kann aus den zuvor genannten Materialien oder Kombinationen derselben bestehen. Der Leuchtkasten 17 besteht vorzugsweise aus PVC, Hartplastik, Gummi, Aluminium, Metallblech oder durchsichtigem Kunststoff bzw. Kunstglas oder aus Kombinationen dieser Materialien.

Der Leuchtkasten 17 kann an der Rückseite ein oder mehrere elastische Bänder wie Gummibänder aufweisen, um ihn auswechselbar an vorhandene Kopfstützen ansetzen bzw. anbringen zu können, so daß er nicht einstückig oder integral mit einer Kopfstütze ausgebildet sein muß. Die zu diesem Zweck geeigneten elastischen Bänder sind in der Zeichnung nicht dargestellt.

Alternativ kann der Leuchtkasten 17 an der Rückseite auch mit Saugnäpfen versehen sein, um ihn beispielsweise an einem Ablagebrett oder an einer anderen Unterlage innerhalb eines Fahrzeuges anbringen zu können, ohne ihn mit Teilen des Fahrzeuges integrieren zu müssen.

Um den Leuchtkörper 19 mit elektrischem Strom versorgen zu können, ist ein Kabel 20 vorgesehen, das von einer nicht dargestellten elektrischen Stromquelle durch einen hohl ausgebildeten Stutzen 21 oder Stempel der Kopfstütze 16 zugeführt werden kann.

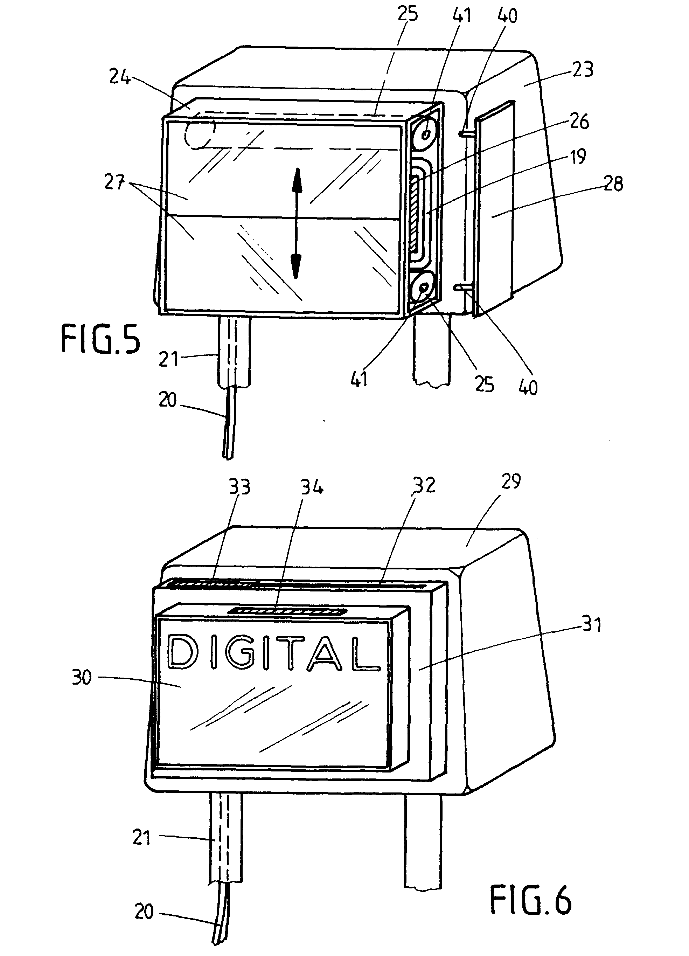

Bei der erfindungsgemäßen Ausführungsform gemäß Figur 5 ist an der Rückseite einer üblichen Kopfstütze 23 ein Leuchtkasten 24 angeordnet, der ein Plakatrolliersystem enthält und der bei der Herstellung der Kopfstütze 23 an der Rückseite derselben angebracht und dadurch mit der Kopfstütze 23 integriert wird.

Am oberen und am unteren Ende des Leuchtkastens 24 ist innerhalb desselben jeweils eine Rolle 25 aus aneinandergefügten Werbeplakaten 27 oder Diapositiven angeordnet, wobei jede dieser Rollen 25 von einem Motor 26 anzutreiben ist. Die Enden der bahnartig aneinandergefügten Plakate 27 oder Diapositive sind an den eine zentrale Öffnung 41 enthaltenden Kern jeweils einer der Rollen 25 angeklemmt.

Mit dem für beide Rollen 25 vorgesehenen Motor 26 ist eine Zeitschaltuhr verbunden, welche in Intervallen gesteuert die Plakate 27 oder Diapositive von oben nach unten bzw. von unten nach oben schrittweise transportiert.

Eine vertikal angeordnete Seitenklappe 28 kann geöffnet werden, um die beiden Rollen 25 einschieben und herausziehen und sie arretieren zu können, wenn die aus Plakate oder sonstigen Werbemitteln bestehenden Rollen 25 vollständig eingezogen bzw. eingeschoben sind. Zu diesem Zweck ist die Seitenklappe 28 mit vorstehenden Stiften 40 versehen, welche in die zentralen Öffnungen 41 der Rollen 25 passen.

Bei der erfindungsgemäßen Ausführungsform gemäß Figur 6 ist an einer üblichen Kopfstütze 29 eines Fahrzeugsitzes ein Digitalcomputer-Bildschirm 30 mit einem dahinter liegenden Computerrelais 31 derart angeordnet, daß dieser Bildschirm 30 auf den hinter dem betreffenden Fahrzeugsitz befindlichen Betrachter weist. Das Computerrelais 31 ist handelsüblich und kann über einen Einschub 32 handelsübliche Disketten aufnehmen und diese verarbeiten. Der Einschub 32 kann mit einem Riegel 33 verschlossen werden.

An einer der Außenseiten oder äußeren Kanten des Bildschirmes 30 ist ein Lautsprecher 34 vorgesehen.

Im übrigen entspricht die Ausführungsform gemäß Figur 6 der Ausführungsform gemäß Figur 5. Der Digitalcomputer-Bildschirm 30 weist mit dem dahinter liegenden Computerrelais 31 an der Rückseite ein oder mehrere nicht dargestellte Gummibänder auf, um den Digitalcomputer-Bildschirmes 30 mit dem dahinter angeordneten Computerrelais 31 an übliche Kopfstützen anbringen zu können.

## Patentansprüche

1. Werbeträger für Innenräume von Fahrzeugen, mit einer kastenförmigen Halterung zum auswechselbaren Halten von Werbemitteln, beispielsweise an der Kopfstütze eines Fahrzeugsitzes, die wenigstens eine durchsichtige Aufnahme zum Einstecken oder Einlegen von blatt-, bogen- oder plattenförmigen Werbemitteln aufweist,
**dadurch gekennzeichnet,**
daß die Halterung als Kasten (17; 24; 30) für bewegbare bzw. wechselnde Werbemittel (27), der an der Rückseite der Kopfstütze (16; 23; 29) angeordnet ist, ausgebildet ist, der mit einer Lichtquelle (19) versehen ist.

2. Werbeträger nach Anspurch 1, dadurch gekennzeichnet, daß der Kasten (17) einen horizontal einschiebbaren Schlitten (18) als Träger für auswechselbare Werbemittel aufweist.

3. Werbeträger nach Anspruch 1, dadurch gekennzeichnet, daß der Kasten (24) aufgerollte bahnförmige Werbemittel (27) und einen taktweise steuerbaren Antriebsmotor (26) enthält.

4. Werbeträger nach Anspruch 1, dadurch gekennzeichnet, daß der Kasten einen Digitalcomputer-Bildschirm (30) mit einem Computerrelais (31) und einer Aufnahme (32) für auswechselbare Disketten aufweist.

5. Werbeträger nach einem der Ansprüche 1 bis 4, dadurch gekennzeichnet, daß die Halterung eine Kopfstütze (11) ist und daß sich auf der Oberfläche dieser Kopfstütze an wenigstens einer Seitenfläche derselben eine Klarsichttasche (12) befindet.

6. Werbeträger nach Anspruch 5, dadurch gekennzeichnet, daß jede Klarsichttasche (12) mit einer schlitzförmigen Öffnung (14) und einem diese Öffnung abdeckenden Verschluß (15) versehen ist.

## Claims

1. Advertising support for interiors of vehicles, with a box-shaped mounting for replaceably holding advertising material, for example on the head rest of a vehicle seat, which has at least one transparent receiving device for the insertion or introduction of sheet-shaped curved or plate-shaped advertising material,
characterised in that,
the mounting is in the form of a box (17; 24; 30) for movable or exchangeable advertising material (27) arranged on the back of the head rest (16; 23; 29) and provided with a light source (19).

2. Advertising support according to claim 1, characterised in that the box (17) has a horizontally insertable slide (18) as the carrier for the exchangeable advertising material.

3. Advertising support according to claim 1, characterised in that the box (24) contains rolled up strip-like advertising material (27) and an intermittently controlled driving motor (26).

4. Advertising support according to claim 1, characterised in that the box comprises a digital computer screen (30) with a computer (31) and a slot (32) for exchangeable diskettes.

5. Advertising support according to one of claims 1 to 4, characterised in that the mounting is a head rest (11) and that a transparent pocket (12) is present on the surface of this head rest on at least one face of it.

6. Advertising support according to claim 5, characterised in that each transparent pocket (12) is provided with a slot-shaped opening (14) and a closure (15) covering over this opening.

## Revendications

1. Support publicitaire pour l'intérieur de véhicules, comprenant un montage en forme de boîte permettant le support et le remplacement de moyens de publicité, par exemple sur l'appuie-tête d'un siège de véhicule, et qui comprend au moins un porte-objet transparent permettant l'enfichage ou l'introduction de moyens de publicité en forme de feuilles, de cartons ou de plaquettes,
caractérisé en ce que le montage est réalisé sous forme d'une boîte (17; 24; 30) pour des moyens de publicité (27) mobiles ou changeants, placée au dos de l'appuie-tête (16; 23; 29), la boîte étant pourvue d'une source lumineuse (19).

2. Support publicitaire selon la revendication 1, caractérisé en ce que la boîte (17) comporte un tiroir (18) coulissant horizontalement dans celle-ci, servant de support pour des moyens de publicité remplaçables.

3. Support publicitaire selon la revendication 1, caractérisé en ce que la boîte (24) contient des moyens de publicité (27) enroulés en forme de bande, et un moteur d'entraînement (26) à commande par intervalles.

4. Support publicitaire selon la revendication 1, caractérisé en ce que la boîte comporte un écran numérique d'ordinateur (30) accompagné d'un relais ordinateur (31) et d'un support (32) pour des disquettes remplaçables.

5. Support publicitaire selon l'une des revendications 1 à 4, caractérisé en ce que le montage de fixation est un appuie-tête (11), et en ce qu'une pochette transparente (12) se trouve à la surface de cet appuie-tête, sur l'une au moins de ses faces latérales.

6. Support publicitaire selon la revendication 5, caractérisé en ce que chaque pochette transparente (12) est pourvue d'une ouverture (14) en forme de fente, et d'une fermeture (15) recouvrant cette ouverture.
